# EUROPÄISCHE PATENTSCHRIFT

(11) **EP 0 654 155 B1**
(45) Veröffentlichungstag und Bekanntmachung des Hinweises auf die Patenterteilung: **02.01.1997**
(21) Anmeldenummer: 93915670.9
(22) Anmeldetag: 27.07.1993
(51) Int. Cl.: G05B 19/05

(54) **EINRICHTUNG ZUM STEUERN DES ÜBERGANGES VON PROZESSOR-BETRIEBSZUSTÄNDEN VON EINEM MOMENTANZUSTAND IN EINEN FOLGEZUSTAND**
DEVICE FOR CONTROLLING THE SWITCHOVER OF PROCESSOR OPERATION FROM AN INSTANTANEOUS STATUS TO A FOLLOW-ON STATUS
DISPOSITIF POUR COMMANDE DE TRANSITION ENTRE REGIMES DE PROCESSEUR INSTANTANE ET SEQUENTIEL

(30) Priorität: 10.08.1992 DE 4226456
(43) Veröffentlichungstag der Anmeldung: 24.05.1995
(73) Patentinhaber: SIEMENS AKTIENGESELLSCHAFT, 80333 München (DE)
(72) Erfinder: HALLWIRTH, Volker, D-78112 St. Georgen (DE)
(86) Internationale Anmeldenummer: DE9300665
(87) Internationale Veröffentlichungsnummer: WO9403848

(56) Entgegenhaltungen:
- DE-A- 3 743 438

## Beschreibung

Die Erfindung betrifft eine Einrichtung gemäß dem Oberbegriff des Anspruchs 1.

Häufig werden zur Lösung von Automatisierungsaufgaben speicherprogrammierbare Steuerungen eingesetzt, die nach Maßgabe eines in einem Speicher hinterlegten Steuerprogramms die Automatisierungsaufgabe lösen. Das Programm ist im Speicher gewöhnlich derart strukturiert, daß der entsprechende Prozessor in der speicherprogrammierbaren Steuerung dieses Programm seriell bearbeiten kann.

Eine derartige speicherprogrammierbare Steuerung ist aus dem "Siemens-Programmierhandbuch für Ablaufsteuerungen mit S5-110 A, SIMATIC S5, 1983, bekannt. Ein für eine Binärsignalverarbeitung ausgelegtes Steuerprogramm wird mit einem Programmiergerät in einer Programmiersprache erstellt und in einem Speicher hinterlegt. Während des Betriebs der Steuerung werden die einzelnen Anweisungen des Steuerprogramms entsprechend einer Bearbeitung mit einer Von-Neumann-Maschine aus dem Speicher nach und nach ausgelesen, interpretiert und die entsprechenden Operationen, z. B. logische Verknüpfungen von Prozeßein- und -ausgangsdaten, ausgeführt. Durch die serielle Bearbeitung des Steuerprogramms ist die Reaktionszeit auf Zustandsänderungen der Eingangsdaten abhängig von der Programmlänge und der Bearbeitungszeit je Anweisung.

Um die Reaktionszeit zu verkürzen, ist es vorteilhaft, eine speicherprogrammierbare Steuerung mit der im Oberbegriff des Anspruchs 1 angegebenen Einrichtung (DE-OS 37 43 438) zu versehen. Mit dieser Einrichtung wird in Abhängigkeit eines in einem Zustandsregister hinterlegten Codes für einen aktuellen Zustand und der Eingangsvektorbelegung digitaler Prozeßeingangsgrößen ein Übergang in einen Folgezustand und eine Übergabe neuer Steuerdaten an eine Ausgangsstufe bewirkt. Mit dieser bekannten Einrichtung kann ein Zustandsübergang lediglich eines Prozessors gesteuert werden.

Der vorliegenden Erfindung liegt die Aufgabe zugrunde, eine Einrichtung der eingangs genannten Art zu schaffen, die einen Zustandsübergang von einem Momentanzustand in einen Folgezustand für mehrere Prozessoren ermöglicht.

Diese Aufgabe wird durch die im kennzeichnenden Teil des Anspruchs 1 angegebenen Maßnahmen gelöst.

In einer Ausgestaltung der Erfindung wird dadurch, daß ein Zustandscode in ein Zustandsregister erst geladen wird, falls in dem anderen Zustandsregister ein bestimmter Zustandscode hinterlegt ist, die Synchronisation der Zustandsübergänge der verschiedenen Prozessor-Betriebszustände ermöglicht.

Die erfindungsgemäße Einrichtung ist insbesondere für eine speicherprogrammierbare Steuerung vorgesehen, die speicherprogrammierbare Zustandssteuerung genannt wird.

Anhand eines in der Zeichnung dargestellten Ausführungsbeispiels wird die Erfindung nachstehend näher erläutert.

Es zeigen
- Figur 1: ein Blockschaltbild einer erfindungsgemäßen Steuereinrichtung,
- Figur 2: eine Datei auswählbarer Steuerdaten und Folgezustands-Codes.

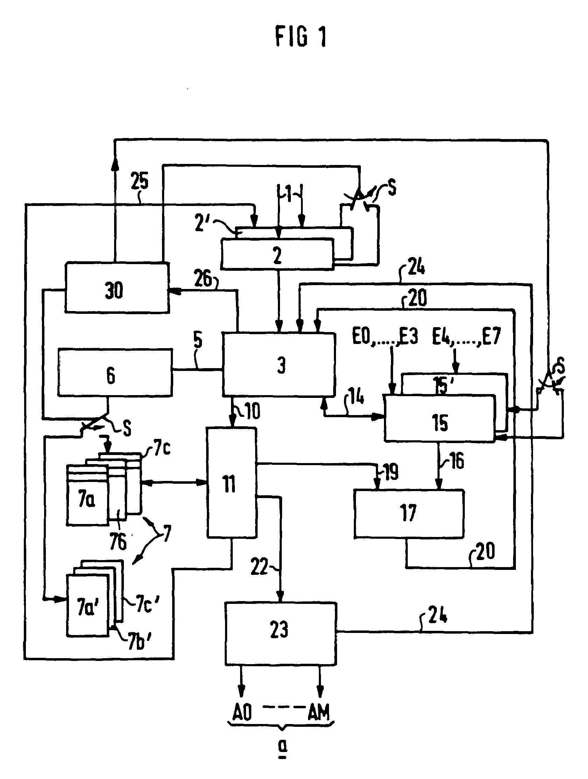

Die Steuereinrichtung gemäß Figur 1 dient der Steuerung des Übergangs von Prozessor-Betriebszuständen von einem Momentanzustand in einen Folgezustand. Der Momentanzustand, mit dem die Steuereinrichtung in Betrieb genommen wird, kann ein beliebiger Zustand eines Prozessors sein. Daher bedeutet es keine Beschränkung der Allgemeinheit, wenn im weiteren als Startzustand der Steuereinrichtung der Rücksetzzustand betrachtet wird.

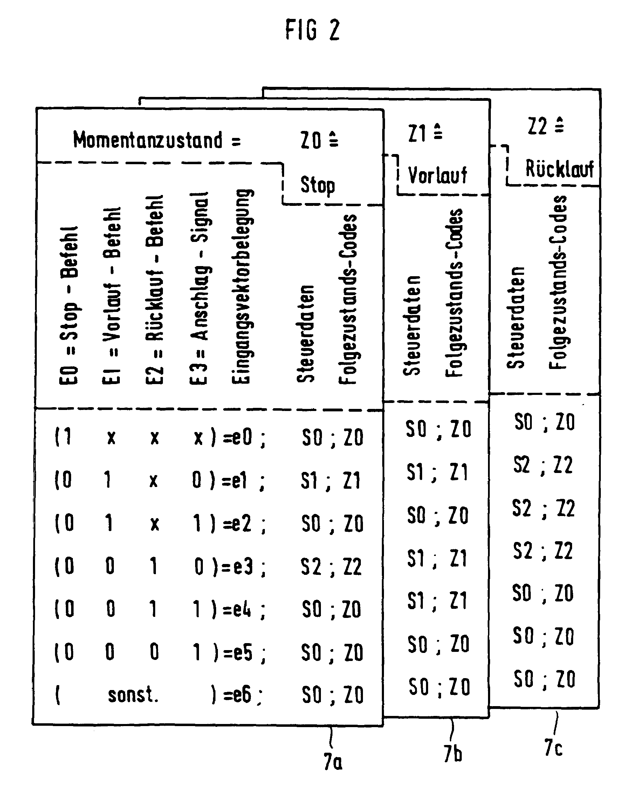

Auf dem Signalweg 1 wird der Code Z0 des Momentanzustandes von außen in das Zustandsregister 2 geladen oder dort aufgrund eines Rücksetzsignals voreingestellt. Das Steuerwerk 3 übernimmt den Code Z0 vom Zustandsregister 2 und veranlaßt über den Signalweg 5 an den Seitenselektor 6 im Datenspeicher 7, den Datenspeicherbereich 7a (vgl. Figur 2) zu aktivieren, der für den Momentanzustand spezifische, vorab erstellte Steuerdaten S0, S1, S2 sowie Codes Z0, Z1, Z2 der aus Momentanzustand erreichbaren Folgezustände enthält.

Eine Änderung mindestens einer der berücksichtigten Prozeßeingangsgrößen E0 ..., also einen Übergang auf eine neue Eingangsvektorbelegung, meldet die Eingangsstufe 15 über den Signalweg 14 dem Steuerwerk 3, welches daraufhin über den Signalweg 10 den Zeilenselektor 11 veranlaßt, aus dem im Datenspeicher 7 aktivierten Datenspeicherbereich 7a den Teilbereich auszuwählen, der die für die neue Eingangsvektorbelegung spezifischen Steuerdaten S0, S1 oder 52 und den Code Z0, Z1 oder Z2 des durch die neue Eingangsvektorbelegung bestimmten Folgezustands enthält.

Um die Auswahl des Datenspeicherbereichs 7a und des Teilbereichs zu veranschaulichen, wird parallel auf Figur 2 Bezug genommen. Dort sind die Datenspeicherbereiche 7a, 7b, 7c symbolisch als Seiten dargestellt, die jeweils die in einem Momentanzustand möglichen Steuerungsfälle vollständig beschreiben. Als zu steuernder Prozeß ist dieser exemplarischen Darstellung ein (Elektro-) Motor zugrundegelegt, der die (codierten) Zustände Z0 = Stop, Z1 = Vorlauf, Z2 = Rücklauf einnehmen kann. Die (Booleschen) Prozeßeingangsgrößen heißen E0 = Stop-Befehl, E1 = Vorlauf-Befehl, E2 = Rücklauf-Befehl, E3 = Anschlag-Signal (z. B. Bereichsende bei einem Positionier- oder Förder-Antrieb o. dgl.). Bei komplizierteren Motorsteuerungen treten weitere Parameter wie Drehzahl, Drehmoment, Strom, Spannung usw. als im allgemeinen Fall digitale Prozeßeingangsgrößen hinzu.

Es werden zunächst die Prozeßeingangsgrößen E0 ... E3 berücksichtigt. Die Prozeßeingangsgrößen E0 ... E3 werden zu den relevanten Eingangsvektorbelegungen e0 ... e6 zusammengefaßt, deren Anzahl deutlich niedriger ist als die rechnerische Maximalanzahl 2⁴ = 16. (Diese allgemein zu beobachtende Eigenschaft von Steuerungsaufgaben erleichtert die Erstellung vollständiger Beschreibungsdateien.) Auch diese Anzahl, nicht nur die Breite, der relevanten Eingangsvektorbelegungen kann im allgemeinen Fall von Momentanzustand zu Momentanzustand verschieden sein.

Im Momentanzustand mit dem Code Z0 wird also der Datenspeicherbereich 7a aktiviert. Tritt nun z. B. die neue Eingangsvektorbelegung e3 auf, veranlaßt das Steuerwerk 3 den Zeilenselektor 11 zur Auswahl des für diese neue Eingangsvektorbelegung e3 spezifischen Teilbereichs, hier der entsprechenden Zeile des Datenspeicherbereichs 7a, um an die für diesen Steuerungsfall geltenden, vorab erstellten Steuerdaten S2 und den Code Z2 des Folgezustands zu gelangen. Auch hier ist der Vollständigkeit halber anzumerken, daß die Steuerdaten zum Erreichen eines bestimmten Folgezustands im allgemeinen Fall vom Momentanzustand sowie von der Eingangsvektorbelegung abhängen.

Die Auswahl des für die neue Eingangsvektorbelegung e3 spezifischen Teilbereichs, also der entsprechenden Zeile des Datenspeicherbereichs 7a, kann in der Weise geschehen, daß die Eingangsvektorbelegung e3 in eine Zeilenadresse umgerechnet und damit unmittelbar auf die Zeile zugegriffen wird. Wo dies nicht möglich ist, etwa weil keine absoluten Zeilenadressen zur Verfügung stehen oder diese infolge Dateien-Transfers innerhalb des Datenspeichers 7 oder zwischen dem Datenspeicher 7 und etwaigen Hintergrundspeichern sich laufend ändern, wird die gesuchte Zeile durch sukzessiven Vergleich der im Datenspeicherbereich 7a gespeicherten Eingangsvektorbelegungen e0 ... e6 mit der neuen Eingangsvektorbelegung e3 ermittelt. Hierzu gibt der Zeilenselektor 11 der Reihe nach die gespeicherten Eingangsvektorbelegungen e0 bis maximal e6 über den Signalweg 19 an den Vergleicher 17. Dies geschieht ggf. zusammen mit einer Information über die Maskierung einzelner Vektorelemente, deren Wert in der betreffenden Konstellation der Prozeßeingangsgrößen E0 ... E3 irrelevant ist. Etwa soll ein Stop-Befehl E0 = 1 absoluten Vorrang haben, d. h. unabhängig von allen anderen Prozeßeingangsgrößen E1, E2, E3 eine Stillsetzung auslösen. Deshalb sind im Datenspeicherbereich 7a in der Zeile der Eingangsvektorbelegung e0 die Werte der Prozeßeingangsgrößen E1, E2, E3 durch "x" gekennzeichnet.

Sobald der Vergleicher 17 schließlich die Gleichheit zwischen der gespeicherten Eingangsvektorbelegung e3 und der über den Signalweg 16 anliegenden neuen Eingangsvektorbelegung e3 feststellt, teilt er dies über den Signalweg 20 dem Steuerwerk 3 mit, welches den Zeilenselektor 11 veranlaßt, einerseits die Steuerdaten 52 der gefundenen Zeile über den Signalweg 22 an den Ausgangsvektorgenerator 23 zu übergeben und andererseits den Folgezustands-Code Z2 der gefundenen Zeile über den Signalweg 25 in das Zustandsregister 2 zu laden.

Der Ausgangsvektorgenerator 23 erzeugt aus den Steuerdaten S2 die Steuer- oder Stellsignale A0 ... AM des Ausgangsvektors a. Im einfachsten und schnellsten Fall kann dies die unmittelbare Ausgabe der übernommenen Steuerdaten 52 bedeuten. Im allgemeinsten Fall ist der Ausgangsvektorgenerator 23 eine Datenverarbeitungseinheit, der in Form der Steuerdaten S2 bestimmte Parameterwerte sowie die Anfangsadresse eines Programmstücks übergeben werden, aus dessen Abarbeitung schließlich die eigentlichen Steuer- und Stellsignale A0 ... AM hervorgehen. Diese Methode erlaubt eine Optimierung zwischen Datei-Volumen und Zykluszeit. Die erfolgreiche Generierung des Ausgangsvektors a wird dem Steuerwerk 3 über den Signalweg 24 quittiert.

Die Steuerdaten S2 bzw. der zugehörige Ausgangsvektor a bewirken in der als Beispiel gewählten Motorsteuerung einen Übergang auf den Folgezustand mit dem Code Z2, d. h. auf einen Rücklauf des Motors, indem entsprechende Stellglieder - z. B. Schütze oder Halbleiterschalter - angesteuert werden, um den Motor mit Strom der benötigten Polarität zu versorgen. Steuerdaten S1, als Antwort auf eine neue Eingangsvektorbelegung e1, bewirken aus dem Grundzustand heraus einen Ubergang auf Motor-Vorlauf, während Steuerdaten S0 jeweils einen Motor-Stop zur Folge haben, d. h. den Motorstrom abschalten.

Der Code Z2 des Folgezustands befindet sich bereits im Zustandsregister 2. Der für diesen Zustand spezifische Datenspeicherbereich 7c - die Datei-Seite mit dem Code Z2 - kann nun vorzugsweise sofort oder auch erst nach dem Eintreffen der nächsten neuen Eingangsvektorbelegung aktiviert werden, und ein neuer Zyklus schließt sich an. Dessen zeitliche Länge - ebenso wie die Dauer aller weiteren Zyklen desselben oder eines anderen Steuerungsproblems - entspricht weitestgehend jener des oben beschriebenen Zyklus, da stets nur fertige oder nahezu fertige Sätze von Steuerdaten S0, S1 bzw. S2 abgerufen und ausgegeben zu werden brauchen. Zu der hohen Geschwindigkeit der Steuerdatenerzeugung tritt also auch noch der Vorteil einer quasi-konstanten Zykluszeit.

Damit ein Betriebszustand eines weiteren Prozessors durch die Steuereinrichtung bearbeitet werden kann, sind ein weiteres Zustandsregister 2', eine weitere Eingangsstufe 15', eine Umschalteinrichtung 30 und weitere Speicherbereiche 7a', 7b' und 7c' vorgesehen. Während des Übergangs des Betriebszustandes eines Prozessors von einem Momentanzustand in den Folgezustand bewirkt das Steuerwerk 3 über die Umschalteinrichtung 30 mit entsprechenden Schaltern S, daß der Übergang des Betriebszustandes des weiteren Prozessors von einem aktuellen Momentanzustand in einen Folgezustand eingeleitet wird. Dazu schaltet die Umschalteinrichtung 30 von dem Zustandsregister 2 auf das Zustandsregister 2', von den Speicherbereichen 7a, 7b, 7c auf die Speicherbereiche 7a', 7b', 7c' und von der Eingangsstufe 15 auf die Eingangsstufe 15' um. Nach Maßgabe des im Zustandsregister 2' hinterlegten Momentanzustandes und der Prozeßeingangsdaten E4 ... E7 wird der Übergang von dem Momentanzustand (Z0, Z1, Z2) in einen Folgezustand (Z0, Z1, Z2) entsprechend der oben beschriebenen Weise bewirkt, wobei die den Prozeßeingangsdaten E4 ... E7 zugeordneten Steuerdaten und der jeweilige Folgezustand ebenfalls im Speicher 7 in den Speicherbereichen 7a', 7b', 7c' hinterlegt sind. Zu Synchronisationszwecken der Zustandsübergänge der verschiedenen Prozessor-Betriebszustände wird ein Zustandscode in eines der beiden Zustandsregister 2, 2' erst dann geladen, falls in dem anderen Zustandsregister ein bestimmter Zustandscode hinterlegt ist.

## Patentansprüche

1. Einrichtung zum Steuern des Übergangs von Prozessor-Betriebszuständen von einem Momentanzustand in einen Folgezustand
- mit einer Zustandsspeichereinrichtung zur Speicherung eines Zustandcodes (Z0, Z1, Z2),
- mit einem Datenspeicher, der in Bereiche unterteilt ist, die jeweils einen Momentanzustand (Z0, Z1, Z2) zugeordnet sind und aus mehreren Teilbereichen bestehen, die jeweils einem Eingangsvektor (e0, e1 ... e6) zugeordnet sind und in denen jeweils ein Folgezustandscode und Steuerdaten gespeichert sind, die in Abhängigkeit des jeweiligen Momentanzustandes und des aktuellen Eingangsvektors ausgelesen werden, wobei die Eingangsvektoren im Datenspeicher die für den jeweiligen Momentanzustand vorgebbaren Kombinationen der für den Momentanzustand vorgebbaren Eingangsgrößen (E0 ... E3; E4 ... E7) sind,
- mit einer Eingangseinrichtung, welcher die aktuellen Eingangsgrößen (E0 ... E3; E4 ... E7) zugeführt sind und welche aus der Gesamtheit der aktuellen eingehenden Eingangsgrößen (E0 ... E3; E4 ... E7) die für den jeweiligen Momentanzustand vorgegebenen Eingangsgrößen (E0 ... E3; E4 ... E7) als aktuellen Eingangsvektor auswählt,
- mit einer Auswahleinrichtung (3, 6, 11), die aufgrund des aktuellen Eingangsvektors und des Momentanzustandes den Teilbereich des Datenspeichers ausliest, der in dem dem Momentanzustand zugeordneten Bereich enthalten und dem aktuellen Eingangsvektor zugeordnet ist,
**dadurch gekennzeichnet,**
- daß der Datenspeicher (7) mindestens in eine erste und eine zweite Gruppe von Speicherbereichen (7a, 7b, 7c; 7a', 7b', 7c') unterteilt ist,
- daß die Eingangseinrichtung mindestens zwei Eingangsstufen (15, 15') aufweist,
- daß die Zustandsspeichereinrichtung mindestens zwei Zustandsregister (2, 2') aufweist,
- daß jeweils ein Zustandsregister (2, 2'), eine Eingangsstufe (15, 15') und eine Gruppe von Speicherbereichen (7a, 7b, 7c; 7a', 7b', 7c') einem Prozessor zugeordnet sind, und
- daß eine Umschalteinrichtung (30) vorgesehen ist, die während des Zustandsüberganges eines Prozessors eine Umschaltung zwischen den Eingangsstufen (15, 15'), den Speicherbereichsgruppen (7a, 7b, 7c; 7a', 7b', 7c') und zwischen den Zustandsregistern (2, 2') bewirkt.

2. Einrichtung nach Anspruch 1, **dadurch gekennzeichnet,**
- daß zur Synchronisation der Zustandsübergänge der verschiedenen Prozessor-Betriebszustände ein Zustandscode in eines der beiden Zustandsregister (2, 2') erst dann geladen wird, falls in dem anderen Zustandsregister (2, 2') ein bestimmter Zustandscode hinterlegt ist.

3. Speicherprogrammierbare Steuerung mit einer Einrichtung nach Anspruch 1 oder 2.

## Claims

1. Device for controlling the transition of processor operating states from an instantaneous state to a follow-on state,
- having a state-storage device for storing a state code (Z0, Z1, Z2),
- having a data store which is subdivided into areas which are respectively associated with an instantaneous state (Z0, Z1, Z2) and consist of a plurality of partial areas which are respectively associated with an input vector (e0, e1 ... e6) and in which respectively a follow-on state code and control data are stored that are read out as a function of the respective instantaneous state and the current input vector, in which case the input vectors in the data store are the combinations of the input variables (E0 ... E3; E4 ... E7), which are preselectable for the instantaneous state, with the combinations of the input variables being preselectable for the respective instantaneous state,
- having an input device to which the current input variables (E0 ... E3; E4 ... E7) are fed and which from all the current incoming input variables (E0 ... E3; E4 ... E7) selects as the current input vector the input variables (E0 ... E3; E4 ... E7) which are preselected for the respective instantaneous state,
- having a selecting device (3, 6, 11) which on the basis of the current input vector and the instantaneous state reads out the partial area of the data store which is contained in the area associated with the instantaneous state and which is associated with the current input vector,
characterised
- in that the data store (7) is subdivided into at least one first and one second group of store areas (7a, 7b, 7c; 7a', 7b', 7c'),
- in that the input device has at least two input stages (15, 15'),
- in that the state-storage device has at least two state registers (2, 2'),
- in that respectively one state register (2, 2'), one input stage (15, 15') and one group of store areas (7a, 7b, 7c; 7a', 7b', 7c') are associated with one processor, and
- in that there is provided a change-over device (30) which during the state transition of one processor effects a change-over between the input stages (15, 15'), the store area groups (7a, 7b, 7c; 7a', 7b', 7c') and between the state registers (2, 2').

2. Device according to claim 1, characterised
- in that for the purposes of synchronizing the state transitions of the various processor operating states, a state code is only loaded into one of the two state registers (2, 2') if a certain state code is stored in the other state register (2, 2').

3. Programmable control having a device according to claim 1 or 2.

## Revendications

1. Dispositif destiné à commander la transition d'états de fonctionnement de processeurs d'un état instantané à un état suivant comportant
- un dispositif de mémorisation d'état pour la mémorisation d'un code d'état (Z0, Z1, Z2),
- une mémoire de données qui est divisée en zones qui sont chacune associées à un état instantané (Z0, Z1, Z2) et qui sont constituées de plusieurs zones partielles qui sont associées chacune à un vecteur d'entrée (e0, e1 à e6) et dans lesquelles sont mémorisés un code d'état suivant et des données de commande qui sont lues en fonction de l'état instantané considéré et du vecteur d'entrée actuel, les vecteurs d'entrée dans la mémoire de données étant les combinaisons, qui peuvent être prescrites pour l'état instantané considéré, des grandeurs d'entrée (E0 à E3 ; E4 à E7), qui peuvent être prescrites pour l'état instantané,
- un dispositif d'entrée auquel sont envoyées les grandeurs d'entrée (E0 à E3 ; E4 à E7) actuelles et qui sélectionne comme vecteur d'entrée actuel, parmi l'ensemble des grandeurs d'entrée (E0 à E3 ; E4 à E7) actuelles entrant, les grandeurs d'entrée (E0 à E3 ; E4 à E7) prescrites pour l'état instantané considéré,
- un dispositif de sélection (3, 6, 11) qui lit, sur la base du vecteur d'entrée actuel et de l'état instantané, la zone partielle de la mémoire de données qui est contenue dans la zone associée à l'état instantané et qui est associée au vecteur d'entrée actuel,
caractérisé par le fait que
- la mémoire de données (7) est divisée au moins en un premier et un second groupe de zones de mémoire (7a, 7b, 7c ; 7a', 7b', 7c'),
- le dispositif d'entrée comporte au moins deux étages d'entrée (15, 15'),
- le dispositif de mémorisation d'état comporte au moins deux registres d'état (2, 2'),
- un registre d'état (2, 2'), un étage d'entrée (15, 15') et un groupe de zones de mémoire (7a, 7b, 7c ; 7a', 7b', 7c') sont associés à un processeur, et
- il est prévu un dispositif de commutation (30) qui déclenche, pendant la transition d'état d'un processeur, une commutation entre les étages d'entrée (15, 15'), entre les groupes de zones de mémoire (7a, 7b, 7c ; 7a', 7b', 7c') et entre les registres d'état (2, 2').

2. Dispositif selon la revendication 1, caractérisé par le fait que
- pour synchroniser les transitions d'état des différents états de fonctionnement des processeurs, un code d'état n'est chargé dans un des deux registres d'état (2, 2') que lorsqu'un code d'état déterminé est mémorisé dans l'autre registre d'état (2, 2').

3. Commande par programme enregistré comportant un dispositif selon la revendication 1 ou 2.
